# EUROPÄISCHE PATENTSCHRIFT

(11) **EP 1 224 859 B1**
(45) Veröffentlichungstag und Bekanntmachung des Hinweises auf die Patenterteilung: **12.05.2004**
(21) Anmeldenummer: 01129688.6
(22) Anmeldetag: 13.12.2001
(51) Int. Cl.: A01K 5/00

(54) **Mit Schneidmessern besetzte Schnecke eines Futtermischers**
Mixing apparatus with cutting blades mounted on a central screw
Appareil mélangeur avec lames de coupe montées sur la vis centrale

(30) Priorität: 17.01.2001 DE 20100892 U; 17.08.2001 DE 10140457
(43) Veröffentlichungstag der Anmeldung: 24.07.2002
(73) Patentinhaber: B. Strautmann & Söhne GmbH & Co., D-49196 Bad Laer (DE)
(72) Erfinder: Strautmann, Heinrich-Bernhard, 49196 Bad Laer (DE); Uhlemann, Ernst, 49326 Melle (DE); Heggemann, Norbert, 49326 Melle (DE)
(74) Vertreter: Specht, Peter, Dipl.-Phys.

(56) Entgegenhaltungen:
- EP-A- 0 943 236
- DE-A- 19 829 867
- FR-A- 2 810 197
- US-A- 5 601 362
- DATABASE WPI Section Ch, Week 199910 Derwent Publications Ltd., London, GB; Class D14, AN 1999-119183 XP002197999 & NL 1 006 275 C (LIET SPECIALS ENG BV), 14. Dezember 1998 (1998-12-14)

## Beschreibung

Die Erfindung betrifft eine mit Schneidmessern besetzte Mischschnecke eines Futtermischers entsprechend dem Oberbegriff des Anspruchs 1.

Derartige mit Schneidmessern besetzte Mischschnecken sind bei verfahrbaren Futtermischem, welche mit mindestens einer vertikalen Mischschnecke ausgestattet sind, allgemein bekannt. Wobei bei diesen bekannten Ausführungen der Kraftbedarf für die Mischarbeit, insbesondere bei langfaserigem, zähen Halmund Blattgut und beim Auflösen hochverdichteter Großballen relativ hoch ansteigen kann, da sich je nach Messerstellung und der Gestaltung der Messerschneide, häufig Halme oder Blätter, wie z.B. Lieschen der Maiskolben, haarnadelförmig um die Messerschneide legen und damit die Schneidarbeit verhindern. Die mit Futteranhäufungen besetzten Schneidmesser erzeugen beim Mischvorgang hohe Widerstandskräfte und verzögern den Mischvorgang erheblich.

Es ist nach der Patentanmeldung DE 19829867, für Mischer mit einem verstellbarem Ladekasten, eine Ausführung bekannt, bei der gesteuerte Mitnehmer an den Rändern der Mischschnecke zu Schneidmessern gestaltet werden können. Die sehr aufwendige, teure Konstruktion zeigt, da die Mitnahmewirkung durch eine zwangweise mechanische Steuerung, im Vordergrund steht, nur eine begrenzte in einem Teilbereich wirkende Schneidarbeit.

Eine weitere Ausführung ist nach der Europäischen Patentanmeldung EP0880890 bekannt, die den Kraftbedarf für das Mischen, teils durch Veränderung im Antriebsbereich und teils durch steuerbare Schneidmesser vorsieht, wobei die Schneidmesser über ein manuell betätigbares Steuerventil jeweils nur alle gemeinsam verstellt werden können.

Die Erfindung wird nachstehend an Beispielen beschrieben und in den Zeichnungen dargestellt.

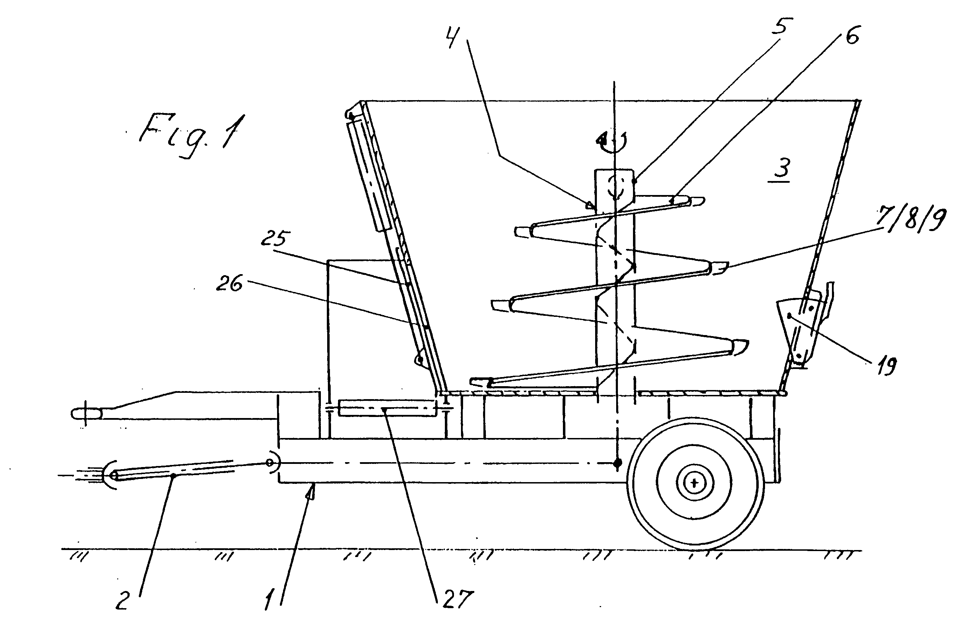

- Fig. 1: zeigt die Seitenansicht eines Futtermischwagens mit einer Mischschnecke.

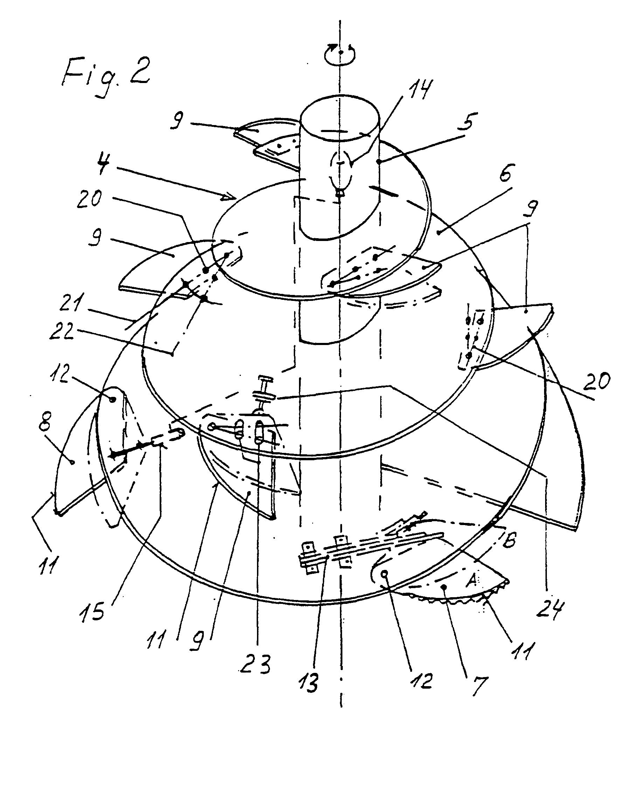

- Fig. 2: zeigt die perspektivische Darstellung einer Mischschnecke mit verschiedenen Ausführungsbeispielen der Schneidmesser.

Die Mischschnecke 4) ist vertikal im Mischraum 3) eines als Anhängefahrzeuges dargestellten Futtermischers 1) angeordnet und wird von der Zapfwelle eines nicht dargestellten Zugfahrzeuges über den Kraftanschluß mittels einer Gelenkwelle 2) angetrieben.

Die zu vermischenden Futterarten werden von oben in den Mischraum 3) eingegeben.

Das eingebrachte Futter wird von der Mischschnecke 4), bestehend aus dem Zentralrohr 5) und der sich von unten nach oben verjüngenden Schneckenspirale 6) und den daran angeordneten Schneidmessern 7) - 9) erfaßt und zerkleinert. Während des Mischvorganges fällt das Futter an den Seitenwänden des Mischraumnes 3) nach unten und wird von der Schneckenspirale 6) wieder nach oben geführt. Die Schneidmesser 7) - 9) zerschneiden hierbei langfaseriges Gut, was die Mischarbeit beschleunigt und die Homogenisierung des Futters verbessert. In den Mischraum 3) stufenweise einschwenkware Keile 19) können zur Beeinflussung des Mischvorganges nach Bedarf verstellt werden.

Die Schneidmesser 7) - 9) arbeiten freistehend ohne Gegenschneiden. Damit sich um eine Messerschneide 11) legendes, haarnadelförmig ansammelndes Futter, nicht die Schneidarbeit behindert, was zur Steigerung des Kraftbedarfes führt, wird am Schneidmesser 7), ein Drehpunkt 12) vorgesehen, um welchen dasselbe bei beginnender Futteransammlung vor der Messerschneide 11) , durch den ansteigenden Druck auf das Schneidmesser 7) gegen den Widerstand einer Blattfeder 13) aus der Schneidstellung A) in eine Stellung B) verschwenkt. Die Futteranhäufung wird nun bei einem flacher liegenden Schneidwinkel abgestreift. Die Blattfeder 13) schwenkt das Schneidmesser 7) anschließend wieder in seine ursprüngliche Schneidstellung A) zurück.

In einer weiteren Ausgestaltung wird ein Schneidmesser 8) gezeigt, welches ebenfalls um einen Drehpunkt 12) verschwenkbar angeordnet ist und an welchem ein Druckmittelzylinder 15) angreift, der mit einem Druckmittelspeicher 14) mit einem eingestellten Vorspanndruck als Ansprechschwelle ausgestattet ist. Wird durch sich vor der Messerschneide 11) ansammelnde Futteranhäufungen ein Schneidwiderstand am Schneidmesser 8) erreicht, welcher der Höhe des Vorspanndruckes entspricht, schwenkt das Schneidmesser 8) zurück, die Futteranhäufung gleitet ab, hiemach wird das von dem vorher vom Druckmittelzylinder 15) an den Druckmittelspeicher 14) abgegebene Druckmittel an den Druckmittelzylinder 15) zurückgegeben, das Schneidmesser 8) nimmt hiernach wieder seine anfängliche Schneidstellung ein.

Dort wo fortlaufend Futter gleicher oder ähnlicher Zusammensetzung vermischt wird, können die Schneidmesser 9) ohne selbsttätige Rückstellung den Futterverhältnissen dauerhaft angepaßt und fest montiert werden, wobei sie mit einem aus mindestens zwei Strahlen 21) und 22) gebildetem Lochbild 20) in der Schneckenspirale 6), an diese, wahlweise auf einem Strahl 21) oder 22) aufgenommen und verschraubt werden.

Die Löcher auf den Strahlen 21) und 22) können durch Langlöcher 23) verbunden werden. Hierbei ist eine stufenlose Einstellung möglich, wobei eine Verstellung der Schneidmesser 9) durch den Arbeitsdruck durch eine Einstellvorrichtung 24), z.B. durch eine Schraube mit Kontermutter, vermieden werden kann.

Anstelle der Lochbildanordnung in der Schneckenspirale 6) ist es möglich, die Lochbildanordnung entsprechend auf die Schneidmesser 9) zu übertragen.

Nach Beendigung des Mischvorganges wird der Schieber 25) geöffnet und das Futter durch die Luke 26) auf ein Förderband 27) abgegeben, welches das Futter im Futtergang ablegt.

## Patentansprüche

1. Mit Schneidmessern (7-9) besetzte Mischschnecke (4) eines Futtermischers (1), welche vertikal in einem Mischraum (3) angeordnet ist und welche am Außendurchmesser ihrer sich von unten nach oben kegelförmig verjüngenden Schneckenspirale (6) mit den Schneidmessern (7-9) besetzt ist, wobei die Schneidmesser (7-9) jeweils um einen Drehpunkt (12) verschwenkbar angeordnet und einzeln einstellbar sind, **dadurch gekennzeichnet, daß** die Schneidmesser (7-9) gemäß einem aus mindestens zwei Strahlen (21, 22) gebildeten Lochbild stufig oder durch Langlöcher (23) stufenlos verstellbar und in jeder Verstellposition fixierbar sind.

2. Mit Schneidmessern besetzte Mischschnecke nach Anspruch 1, **dadurch gekennzeichnet, daß** mittels einer Einstellvorrichtung (24) die Schneidmesser (9) fixiert werden können.

3. Mit Schneidmessern besetzte Mischschnecke nach den Ansprüchen 1 oder 2, **dadurch gekennzeichnet, daß** ein v-förmiges Lochbild (20) auf dem Schneidmesser angeordnet ist.

4. Mit Schneidmessern besetzte Mischschnecke nach den Ansprüchen 1 oder 2, **dadurch gekennzeichnet, daß** sowohl auf der Schnecke als auch auf dem Schneidmesser ein v-förmig angeordnetes Lochbild vorhanden ist.

5. Mit Schneidmessern besetzte Mischschnecke nach einem der Ansprüche 1 bis 4, **dadurch gekennzeichnet, daß** ein Druckmittelspeicher (14) innerhalb eines Zentralrohres (5) angeordnet ist.

## Claims

1. Mixing screw (4), which is fitted with cutting blades (7-9), of a forage mixer (1), the said mixing screw being arranged vertically in a mixing space (3) and being fitted with the cutting blades (7-9) on the outside diameter of its helical screw (6) which tapers conically from the bottom upwards, the cutting blades (7-9) being arranged in a manner such that they can each be pivoted about a pivot point (12), and being able to be set individually, **characterized in that** the cutting blades (7-9) can be adjusted in stages, in accordance with the hole pattern formed from at least two jets (21, 22) or can be adjusted in an infinitely variable manner by means of elongated holes (23) and can be fixed in each adjustment position.

2. Mixing screw fitted with cutting blades, according to Claim 1, **characterized in that** the cutting blades (9) can be fixed by means of a setting device (24).

3. Mixing screw fitted with cutting blades, according to Claims 1 or 2, **characterized in that** a v-shaped hole pattern (20) is arranged on the cutting blade.

4. Mixing screw fitted with cutting blades,.according to Claims 1 or 2, **characterized in that** there is a hole pattern arranged in a v-shaped manner both on the screw and on the cutting blade.

5. Mixing screw fitted with cutting blades, according to one of Claims 1 to 4, **characterized in that** a pressure medium reservoir (14) is arranged within a central pipe (5).

## Revendications

1. Vis sans fin de mélange (4) équipée de lames de coupe (7-9) d'un mélangeur à fourrage (1), laquelle est disposée verticalement dans une chambre de mélange (3) et est équipée des lames de coupe (7-9) sur le diamètre extérieur de sa spirale de vis sans fin (6) se rétrécissant en forme de cône de bas en haut, les lames de coupe (7-9) étant disposées de manière à pouvoir pivoter chacune autour d'un point de rotation (12) et étant réglables individuellement, **caractérisée en ce que** les lames de coupe (7-9) sont réglables par crans selon un modèle de perforations formé par au moins deux rayons (21-22), ou en continu par des trous oblongs (23), et peuvent être fixées dans toute position de réglage.

2. Vis sans fin de mélange équipée de lames de coupe selon la revendication 1, **caractérisée en ce que** les lames de coupe (9) peuvent être fixées au moyen d'un dispositif de réglage (24).

3. Vis sans fin de mélange équipée de lames de coupe selon les revendications 1 ou 2, **caractérisée en ce qu'**un modèle de perforations (20) en V est disposé sur la lame de coupe.

4. Vis sans fin de mélange équipée de lames de coupe selon les revendications 1 ou 2, **caractérisée en ce qu'**un modèle de perforations disposées en V est prévu sur la vis sans fin comme sur la lame de coupe.

5. Vis sans fin de mélange équipée de lames de coupe selon l'une des revendications 1 à 4, **caractérisée en ce qu'**un accumulateur de fluide sous pression (14) est disposé à l'intérieur d'un tube central (5).
